# EUROPÄISCHE PATENTANMELDUNG

(11) **EP 4 085 741 A1**
(43) Veröffentlichungstag der Anmeldung: **09.11.2022**
(21) Anmeldenummer: 22167276.9
(22) Anmeldetag: 08.04.2022
(51) Int. Cl.: A01B 69/04, G05D 1/00, G05D 1/02

(54) **LENKVERFAHREN FÜR EINE LANDMASCHINE**

(30) Priorität: 03.05.2021 DE 102021111360
(71) Anmelder: Maschinenfabrik Bernard Krone GmbH & Co. KG, 48480 Spelle (DE)
(72) Erfinder: Horstmann, Jan, 48431 Rheine (DE); TENKLEVE, ANDRE, 48480 Spelle (DE); RABENSCHLAG, MATHIAS, 48480 Spelle (DE)

(57) **Zusammenfassung**

Die Erfindung betrifft ein Lenkverfahren für eine Landmaschine (1). Um eine kostengünstige und präzise Lenkung einer Landmaschine im Bereich eines Vorgewendes zu ermöglichen, ist erfindungsgemäß vorgesehen, dass das Lenkverfahren folgende Schritte aufweist:
- Lenken (S100) der Landmaschine (1) entlang einer Ausgangs-Fahrspur (23) in einem Bearbeitungsbereich (20), bis zum Erreichen eines an den Bearbeitungsbereich (20) angrenzenden Vorgewendes (25) an einem Austrittspunkt (PA) der Ausgangs-Fahrspur (23), mittels einer von GNSS-Positionsdaten unabhängigen Spurlenkung;
- Automatisches Lenken (S140) der Landmaschine (1) durch das Vorgewende (25), bis zum Erreichen eines Eintrittspunkts (PE) einer Ziel-Fahrspur (24) im Bearbeitungsbereich (20), mittels einer Wendelenkung, welche die Landmaschine (1) basierend auf einer ausschließlich anhand von GNSS-Positionsdaten ermittelten Ist-Position (PI) der Landmaschine (1) lenkt; sowie
- Lenken (S100) der Landmaschine (1) entlang der Ziel-Fahrspur (24) mittels der Spurlenkung.

## Beschreibung

Die vorliegende Erfindung betrifft ein Lenkverfahren für eine Landmaschine nach dem Oberbegriff von Anspruch 1 sowie eine Landmaschine nach dem Oberbegriff von Anspruch 12.

Landmaschinen, insbesondere Erntemaschinen, weisen heutzutage in der Regel Systeme auf, die den Benutzer bei der Steuerung zumindest unterstützen oder die Landmaschine sogar vollständig autonom steuern. Hierdurch kann eine optimale Effizienz erreicht und gleichzeitig der Benutzer bzw. Fahrer entlastet werden. Üblicherweise wird eine Anbaufläche bzw. ein Feld spurweise bearbeitet, wobei die Landmaschine in einer gewissen, konstruktionsbedingten Breite eine Spur abarbeitet, bis ein Rand des Feldes erreicht ist. Dann erfolgt ein Wendevorgang in einem als Vorgewende bezeichneten Bereich, welcher außerhalb des Feldes liegen kann oder ein vorab bearbeiteter Randbereich des Feldes ist. Nach dem Wendevorgang wird eine nächste, z.B. benachbarte, Spur bearbeitet. Für optimale Effizienz wird ein Wendevorgang angestrebt, durch den die nächste Spur sowohl schnell als auch präzise angefahren werden kann.

Um die notwendige Präzision zu erzielen, werden heute in der Regel Systeme eingesetzt, bei denen die Position der Landmaschine mittels RTK (real time kinematic; Echtzeitkinematik) bestimmt wird. Die Positionsbestimmung basiert auf GNSS (global navigation satellite system; Globales Navigationssatellitensystem), wobei allerdings zusätzlich zu Signalen von Satelliten auch Signale einer terrestrischen Basisstation mit GNSS-Empfänger ausgewertet werden. Die Signale der Basisstation ermöglichen eine Korrektur der rein satellitenbasierten Positionsmessung. Letztere unterliegt einer unvermeidlichen zeitlichen Drift, die Abweichungen im Bereich von einigen Metern mit sich bringt. Das Ansteuern einer Spur erfordert hingegen typischerweise eine Genauigkeit im Bereich von wenigen zehn Zentimetern, z.B. maximal 30 cm. Zwar lassen sich mittels RTK auch Genauigkeiten im einstelligen Zentimeter-Bereich realisieren, allerdings entstehen hierdurch vergleichsweise hohe Kosten, insbesondere für ein RTK-fähiges GNSS-System der Landmaschine, für eine eigene Basisstation oder für Gebühren eines Korrekturdienstanbieters. Außerdem besteht eine hohe Abhängigkeit von Komponenten, die gegenüber einem normalen GNSS-System zusätzlich benötigt werden. Neben einer GNSS-basierten Steuerung ist es z.B. auch möglich, Strukturen wie eine Bestandskante, Pflanzenreihen oder dergleichen optisch oder mechanisch (z.B. über einen Reihentaster) zu erfassen, um die Landmaschine zu steuern. Insbesondere im Vorgewende ist eine derartige Steuerung mit ausreichender Präzision aber problematisch, da das Vorgewende in der Regel unstrukturiert ist. Auch eine abwechselnde oder gleichzeitige Nutzung von GNSSbasierter Steuerung und optischer Steuerung ist im Stand der Technik bereits vorgeschlagen worden.

Aus der DE 101 29 135 B4 ist eine Einrichtung zur Positionsbestimmung eines landwirtschaftlichen Arbeitsfahrzeugs bekannt, mit einer Auswertungseinrichtung, die mit einem satellitenbasierten ersten Positionssignal und einem zweiten Positionssignal beaufschlagt wird, welches anhand der Position des Arbeitsfahrzeugs relativ zu einer Bearbeitungsgrenze ermittelt wird. Der Auswertungseinrichtung liegt eine Qualitätsinformation über die Qualität beider Positionssignale vor, und sie berücksichtigt bei der Positionsberechnung das erste Positionssignal und das zweite Positionssignal entsprechend der Qualitätsinformation gewichtet.

Die EP 3 146 825 A1 offenbart ein Fahrerassistenzsystem für eine landwirtschaftliche Arbeitsmaschine zum Bearbeiten einer einen Feldbestand aufweisenden Fläche entlang von Arbeitsfahrspuren, wobei eine Spurführungssteuerung vorgesehen ist, die im Rahmen eines Wendevorgangs in einem Vorgewende zum sensorgestützten Abfahren einer Wendefahrspur zwischen einer Ausgangs-Arbeitsfahrspur und einer hierzu versetzten Ziel-Arbeitsfahrspur mit entgegengesetzter Fahrtrichtung Lenkbefehle für die Arbeitsmaschine erzeugt. Ein Bestandskantensensor ist zum Erfassen von Bestandskanten im Feldbestand vorgesehen und die Spurführungssteuerung führt im Rahmen des Wendevorgangs einen Ausrichtvorgang durch, in dem sie mittels des Bestandskantensensors eine Referenz-Bestandskante des Feldbestands erfasst, und erzeugt darauf basierend zum Ausrichten der Arbeitsmaschine auf die Ziel-Arbeitsfahrspur Lenkbefehle für die Arbeitsmaschine.

Aus der EP 1 762 129 A1 ist ein Lenksystem eines Fahrzeugs mit Spurführungssystem zur Ermittlung einer Fahrtroute bekannt, wobei das Spurführungssystem über zumindest eine Datenverarbeitungseinrichtung eine automatische Lenkung des Fahrzeugs bewirkt. Das Spurführungssystem umfasst zumindest ein erstes, beispielsweise GPS-basiertes Fahrtroutendetektionssystem und wenigstens ein weiteres, beispielsweise optisches Fahrtroutendetektionssystem. Die Fahrtroutendetektionssysteme sind über zumindest eine Datenverarbeitungseinrichtung in der Weise gekoppelt, dass zwischen den Fahrtroutendetektionssystemen umgeschaltet werden kann.

Aufgabe der Erfindung ist es, eine kostengünstige und präzise Lenkung einer Landmaschine im Bereich eines Vorgewendes zu ermöglichen.

Die Aufgabe wird gelöst mit einem Lenkverfahren mit den Merkmalen des unabhängigen Patentanspruchs 1 und einer Landmaschine mit den Merkmalen des unabhängigen Patentanspruchs 12. Vorteilhafte Ausführungsformen sind den abhängigen Ansprüchen entnehmbar.

Dafür wird ein Lenkverfahren für eine Landmaschine geschaffen, mit den Schritten:
- Lenken der Landmaschine entlang einer Ausgangs-Fahrspur in einem Bearbeitungsbereich, bis zum Erreichen eines an den Bearbeitungsbereich angrenzenden Vorgewendes an einem Austrittspunkt der Ausgangs-Fahrspur, mittels einer von GNSS-Positionsdaten unabhängigen Spurlenkung;
- Automatisches Lenken der Landmaschine durch das Vorgewende, bis zum Erreichen eines Eintrittspunkts einer Ziel-Fahrspur im Bearbeitungsbereich, mittels einer Wendelenkung, welche die Landmaschine basierend auf einer ausschließlich anhand von GNSS-Positionsdaten ermittelten Ist-Position der Landmaschine lenkt; sowie
- Lenken der Landmaschine entlang der Ziel-Fahrspur mittels der Spurlenkung.

Die Landmaschine kann auch als landwirtschaftliche Arbeitsmaschine bezeichnet werden. Dies schließt ausdrücklich auch Gespanne ein, mit einem Schlepper und wenigstens einer hiervon gezogenen Maschine bzw. einem Anhänger. Die Landmaschine kann insbesondere eine Erntemaschine wie ein Feldhäcksler, ein Mähdrescher, eine Ballenpresse oder ein Ladewagen sein. Es könnte sich aber auch z.B. um einen Traktor mit einem Zetter, einem Pflug, einem Düngerstreuer, einem Güllefass oder dergleichen handeln. Im Rahmen des Lenkverfahrens fährt die Landmaschine zum einen durch einen Bearbeitungsbereich, z.B. einen Acker, ein Feld bzw. einen Teil desselben, wobei zur Vereinfachung die Begriffe "Feld" und "Acker" nachfolgend gleichbedeutend verwendet werden. In diesem Bearbeitungsbereich erfolgt in der Regel zumindest zeitweise eine Bearbeitung, z.B. Pflügen, Düngen, Mähen, Zetten, Erntegutaufnahme oder dergleichen. Zum anderen fährt die Landmaschine durch ein Vorgewende, das an den Bearbeitungsbereich angrenzt und genauer gesagt randseitig desselben ausgebildet ist. Das Vorgewende kann bspw. außerhalb des Feldes liegen oder es kann sich um einen Randbereich des Feldes handeln, der zu Beginn der Bearbeitung vorab bearbeitet, bspw. abgeerntet, wird.

Zunächst wird die Landmaschine entlang einer Ausgangs-Fahrspur im Bearbeitungsbereich gelenkt. Eine Fahrspur, welche auch als Bearbeitungsspur bezeichnet werden könnte, entspricht in diesem Zusammenhang dem Fahrweg der Landmaschine durch den Bearbeitungsbereich, wobei normalerweise vorgesehen ist, dass die gesamte oder zumindest überwiegende Fläche des Bearbeitungsbereichs nach und nach durch Abfahren einzelner Fahrspuren bearbeitet wird, wobei die Fahrspuren ggf. auch räumlich aufeinander folgen. Normalerweise fährt die Landmaschine eine Spur ab, wendet dann im Vorgewende und fährt die nachfolgende Spur in entgegengesetzter Fahrtrichtung ab. Die jeweilige Fahrspur ist normalerweise annähernd gerade, könnte allerdings auch wenigstens abschnittsweise gekrümmt sein. Jeder Fahrspur lässt sich eine Breite zuordnen, die der effektiven Bearbeitungsbreite der Landmaschine entsprechen kann, also der Breite, die quer zur Fahrtrichtung effektiv bearbeitet werden kann. Im Falle eines Mähdreschers oder eines Feldhäckslers wäre dies bspw. die Breite des Erntevorsatzes. Im Falle einer Ballenpresse oder eines Ladewagens entspricht die Breite der Spur üblicherweise der Arbeitsbreite des vorangegangenen Prozesses, wie z.B. Schwaden oder Mähen mit Schwadablage. In Abhängigkeit von der aktuell durch die Landmaschine durchgeführten Bearbeitung sowie von vorangegangenen Bearbeitungsschritten können unterschiedliche Breiten der Fahrspur in unterschiedlicher Weise definiert werden und die Erfindung ist diesbezüglich in keiner Weise beschränkt. Für eine effektive Bearbeitung entspricht der Versatz zweier aufeinanderfolgender Fahrspuren quer zur Fahrtrichtung normalerweise annähernd der o.g. Breite (z.B. Bearbeitungsbreite), so dass jeder Teil des Bearbeitungsbereichs genau einmal erfasst wird. Es sind allerdings auch Abweichungen hiervon denkbar, so dass zwischen zwei räumlich benachbarten Fahrspuren ein Abstand gegeben ist oder dass diese Fahrspuren eine Überschneidung aufweisen. Normalerweise folgen zwei räumlich benachbarte Fahrspuren auch zeitlich im Rahmen der Bearbeitung aufeinander. Es sei auch darauf hingewiesen, dass eine Fahrspur, die durchfahren wird, nicht zwangsläufig (vollständig) bearbeitet werden muss, wenngleich dies die Regel ist. Die Landmaschine wird entlang der Ausgangs-Fahrspur gelenkt, wobei der Begriff "lenken" hier und im Folgenden das Einhalten oder Verändern einer Fahrtrichtung bezeichnet, normalerweise durch Einstellung eines Lenkwinkels wenigstens einer lenkbaren Achse. In diesem Sinne handelt es sich auch um einen "Lenken", wenn in einer geraden Spur die Landmaschine konstant geradeaus fährt. Zusätzlich kann das Lenken auch eine Einstellung der Fahrtgeschwindigkeit beinhalten.

Die Landmaschine wird entlang der Ausgangs-Fahrspur mittels einer Spurlenkung gelenkt, die unabhängig von GNSS-Positionsdaten ist. D.h., es werden keine Positionsdaten eines globalen Navigationssatellitensystems von der Spurlenkung herangezogen, um zu bestimmen, wie die Landmaschine zu lenken ist. Der Lenkvorgang kann allgemein als Regelungsvorgang angesehen werden, bei der eine zu erreichende, gewissermaßen "ideale" Soll-Fahrlinie die Führungsgröße darstellt, eine gemessene Ist-Fahrlinie die Regelgröße und die Lenkanpassungen (bspw. des Lenkwinkels) die Stellgröße. Entlang der Ausgangs-Fahrspur wird somit die Ist-Fahrlinie, welche auch als zeitliche Abfolge von Ist-Positionen angesehen werden kann, unabhängig von GNSS-Positionsdaten eingestellt. Es ist zwar möglich, dass die Landmaschine derartige GNSS-Positionsdaten kontinuierlich bzw. wiederholt erfasst, diese werden jedoch von der Spurlenkung nicht einbezogen. Die Spurlenkung kann sowohl durch Hardwarekomponenten als auch durch Software realisiert sein. Mögliche Ausgestaltungen der Spurlenkung werden weiter unten besprochen. Diese machen sich zum Großteil eine vorhandene Struktur des Bearbeitungsbereichs zu Nutze, die den Verlauf der (Ausgangs-)Fahrspur vorgibt, bspw. Ackerfurchen, Pflanzenreihen, eine Bestandsgrenze oder dergleichen. Wenngleich hier von "einer" Spurlenkung die Rede ist, ist es möglich, dass zeitlich aufeinanderfolgend unterschiedliche Lenkprinzipien zum Einsatz kommen, wobei bspw. die Ist-Positionen in unterschiedlicher Weise bestimmt werden können. Insofern könnte man korrekterweise auch von "wenigstens einer Spurlenkung" sprechen. Sofern unterschiedliche Lenkprinzipien eingesetzt werden, ist diesen allerdings die Unabhängigkeit von GNSS-Positionsdaten gemeinsam. Die Spurlenkung wird zum Lenken der Landmaschine bis zum Austrittspunkt der Ausgangs-Fahrspur verwendet, also bis zum Erreichen des Vorgewendes. Der Austrittspunkt entspricht dem Ende der Ausgangs-Fahrspur, an dem die Landmaschine aus der Spur herausfährt und in das Vorgewende einfährt. Statt eines Austrittspunktes könnte man auch von einer Ausfahrposition oder einem Ausfahrbereich sprechen.

Danach erfolgt ein automatisches Lenken der Landmaschine durch das Vorgewende, bis zum Erreichen des Eintrittspunkts einer Ziel-Fahrspur im Bearbeitungsbereich, mittels einer Wendelenkung. Das Lenken erfolgt automatisch, so dass die Wendelenkung auch als automatische Lenkung bezeichnet werden kann. Solange die Wendelenkung aktiv ist, erfolgt das Lenken der Landmaschine ohne Eingriff eines Benutzers bzw. Fahrers. Normalerweise wird die Wendelenkung ausschließlich durch Komponenten realisiert, die in der Landmaschine installiert sind. Sie kann sowohl durch Hardwarekomponenten als auch durch Software realisiert sein. Die Wendelenkung lenkt die Landmaschine basierend auf einer ermittelten Ist-Position, welche regelungstechnisch als Regelgröße angesehen werden kann. Diese ist-Position wird erfindungsgemäß ausschließlich anhand von GNSS-Positionsdaten, ermittelt. Die entsprechende Wendelenkung lenkt die Landmaschine durch das Vorgewende bis zum Eintrittspunkt der Ziel-Fahrspur. Der Eintrittspunkt entspricht dem Anfang der Ziel-Fahrspur, an dem die Landmaschine aus dem Vorgewende herausfährt und in die Spur einfährt. Statt eines Eintrittspunktes könnte man auch von einer Einfahrposition oder einem Einfahrbereich sprechen. Insgesamt wird dabei ein Wendemanöver durchgeführt, das normalerweise effektiv einer 180°-Wende entspricht. Wie bereits oben angedeutet, folgt die Ziel-Fahrspur räumlich normalerweise unmittelbar oder mit geringem Abstand auf die Ausgangs-Fahrspur, allerdings ist dies nicht erfindungswesentlich. Es könnte auch ein erheblicher Abstand zwischen den beiden Fahrspuren gegeben sein. Die Begriffe "Ausgangs-Fahrspur" und "Ziel-Fahrspur" dienen lediglich der begrifflichen Unterscheidung und der Kennzeichnung der zeitlichen Reihenfolge und enthalten keine Aussage über die räumliche Anordnung der Fahrspuren innerhalb des Bearbeitungsbereichs.

Nach dem Durchfahren des Vorgewendes und dem Erreichen des Eintrittspunkts der Ziel-Fahrspur wird die Landmaschine mittels der Spurlenkung entlang der Ziel-Fahrspur gelenkt. Dieser Vorgang unterscheidet sich nicht grundlegend vom Lenken entlang der Ausgangs-Fahrspur und wird insoweit nicht nochmals erläutert. Aufgrund des durchgeführten Wendevorgangs fährt die Landmaschine entlang der Ziel-Fahrspur allerdings normalerweise in Gegenrichtung zur Ausgangs-Fahrspur.

Die Erfindung basiert auf der grundlegenden Erkenntnis, dass das Durchfahren des Vorgewendes innerhalb vergleichsweise kurzer Zeit durchgeführt werden kann, bspw. zwischen 5 s und 20 s, und in aller Regel einen geringen Teil der insgesamt zurückgelegten Fahrstrecke ausmacht. Sofern korrigierte GNSS-Positionsdaten verwendet werden, bei denen auf gebührenpflichtige Korrektursignale zurückgegriffen wird, lassen sich die Kosten gering halten, wenn die Nutzung der Korrektursignale auf das Durchfahren des Vorgewendes beschränkt bleibt. Hingegen eignen sich die GNSS-Positionsdaten nicht oder nur schlecht für die Lenkung entlang einer Fahrspur, beispielsweise weil der Verlauf der Fahrspur oder von Pflanzenreihen eines Bestandes unregelmäßig sein kann und zahlreiche, kaum vorhersehbare Lenkeingriffe erfordern kann. Auch kann die Präzision selbst korrigierter GNSS-Positionsdaten u.U. unzureichend sein, um der Fahrspur in idealer Weise zu folgen. Andererseits kann die Lenkung entlang der Fahrspuren mittels anderer Methoden realisiert werden, die im Vorgewende nicht oder schlecht anwendbar sind, wie nachfolgend ausgeführt wird.

Bevorzugt lenkt die Wendelenkung die Landmaschine basierend auf einer ausschließlich anhand unkorrigierter GNSS-Positionsdaten ermittelten Ist-Position der Landmaschine. "Unkorrigiert" bedeutet hierbei, dass es sich um Positionsdaten handelt, die ausschließlich auf Signalempfang von Navigationssatelliten basieren, nicht jedoch auf Signalempfang von einer terrestrischen Basisstation. Die Ungenauigkeiten unkorrigierter GNSS-Positionsdaten, die sie als Grundlage einer dauerhaften präzise Lenkung unbrauchbar machen, beruhen hauptsächlich auf einer zeitlichen Drift, die über längere Zeiträume, bspw. mehrere Minuten oder gar Stunden, zu Abweichungen im Bereich von einigen Metern führt. Dementsprechend eignen sich unkorrigierte GNSS-Positionsdaten nicht dafür, eine Absolutposition mit hoher Genauigkeit zu bestimmen. Hingegen lassen sich Relativpositionen innerhalb eines begrenzten Zeitraums, in dem sich die genannte Drift nicht oder kaum auswirkt, mit hoher Genauigkeit bestimmen, bspw. auf einige Zentimeter genau. Um vom Austrittspunkt der Ausgangs-Fahrspur aus den Eintrittspunkt der Ziel-Fahrspur anzusteuern, ist eine Kenntnis der Relativpositionen ausreichend, so dass innerhalb des zeitlich vergleichsweise schnell erfolgenden Wendevorgangs die unkorrigierten GNSS-Positionsdaten verwendet werden können. Sie erlauben auch eine präzise Lenkung zum Eintrittspunkt der Ziel-Fahrspur, ob entlang einer einfachen, z.B. halbkreisförmigen Fahrlinie oder entlang einer komplizierteren, z.B. schlüssellochförmigen Kurve. Hingegen eignen sich die unkorrigierten GNSS-Positionsdaten nicht für die Lenkung entlang einer Fahrspur, da das Bearbeiten einer Fahrspur (bei typischen Dimensionen eines Bearbeitungsbereichs) wesentlich länger dauert als der Wendevorgang, z.B. einige Minuten. Demensprechend würde sich dort die Drift wesentlich bemerkbar machen. Entlang der Fahrspuren kann mittels anderer Methoden gelenkt werden.

Das Aktivieren sowie Deaktivieren der Wendelenkung kann manuell durch den Fahrer vorgenommen werden. Alternativ hierzu ist es bevorzugt, dass wenigstens ein Übergang zwischen einer Fahrspur und dem Vorgewende automatisch erkannt und daraufhin automatisch zwischen Wendelenkung und Spurlenkung umgeschaltet wird. Zum einen kann der Austrittspunkt der Ausgangs-Fahrspur automatisch erkannt und daraufhin automatisch die Wendelenkung aktiviert werden. Das Spurende kann z.B. mittels optischer Bilderkennung erkannt werden oder daran, dass ein Reihentaster keinen Bestand mehr erfasst, dass die Motorlast sich plötzlich verringert, ein Vorsatzgerät aushebt etc. Bei einem Feldhäcksler kann eine sich ändernde Stellung der Anpresswalzen erkannt werden, ein Schwenken eines Auswurfbogens auf die gegenüberliegende Seite (welches durch den Benutzer ausgelöst wird) oder dergleichen. Falls in der Ausgangs-Fahrspur manuell gelenkt wird, kann auch eine Änderung des Lenkwinkels oder eine Änderung der Ausrichtung der Landmaschine (z.B. mittels eines Gyroskops) detektiert werden. Selbstverständlich sind auch noch andere Detektionsmechanismen denkbar. Der Eintrittspunkt der Ziel-Fahrspur kann z.B. auch mittels Bilderkennung identifiziert werden oder mechanisch mittels eines Reihentasters. Allerdings wäre, je nach Beschaffenheit des Bearbeitungsbereichs, auch der Einsatz von aktiven Sensoren wie z.B. Lidar denkbar.

Bevorzugt wird eine Soll-Fahrlinie vom Austrittspunkt der Ausgangs-Fahrspur zum Eintrittspunkt der Ziel-Fahrspur ermittelt, bevor die Landmaschine entsprechend der vorab ermittelten Soll-Fahrlinie durch das Vorgewende gelenkt wird. D.h. die Soll-Fahrlinie, die einen als optimal angesehenen Weg von der ersten zur Ziel-Fahrspur beschreibt, wird vollständig festgelegt, bevor die Landmaschine beginnt, das Vorgewende zu durchfahren. Bei der Ermittlung der Soll-Fahrlinie können unterschiedliche Parameter berücksichtigt werden, z.B. die effektive Bearbeitungsbreite der Landmaschine, welche i. Allg. den Versatz der beiden Fahrspuren bestimmt, der minimale Kurvenradius, der sich mit der Landmaschine realisieren lässt, die Dimensionen des Vorgewendes, die Ausrichtung der Grenze des Bearbeitungsbereichs etc. Für die Parameter, die das Vorgewende und den Bearbeitungsbereich betreffen, kann z.B. auf eine Schlagkartei zurückgegriffen werden. Dabei können sogar unkorrigierte GNSS-Positionsdaten als näherungsweise korrekte Absolutposition verwendet werden, da sich z.B. die Dimensionen des Vorgewendes oder der Verlauf der Grenze des Bearbeitungsbereichs nicht innerhalb weniger Meter (wesentlich) ändern. Während des Abfahrens des Vorgewendes vergleicht die Wendelenkung die Ist-Position wiederholt mit der Soll-Fahrlinie und lenkt die Landmaschine, um eine Abweichung von der Soll-Fahrlinie zu minimieren. D.h. die Soll-Fahrlinie (bzw. eine Position entlang derselben) bildet die Führungsgröße, während die Ist-Position die hieran anzupassende Regelgröße darstellt.

Dabei werden bevorzugt ausgehend von einer ermittelten Ist-Position am Austrittspunkt der Ausgangs-Fahrspur eine Mehrzahl von Soll-Positionen entlang der Soll-Fahrlinie bestimmt, mit welchen die Wendelenkung die jeweilige Ist-Position beim Durchfahren des Vorgewendes vergleicht. D.h. es wird, entsprechend den (korrigierten oder unkorrigierten) GNSS-Positionsdaten, eine Ist-Position am Austrittspunkt der Ausgangs-Fahrspur bestimmt und ausgehend hiervon werden Soll-Positionen, gewissermaßen Wegpunkte, entlang der Soll-Fahrlinie bestimmt. Diese Soll-Positionen sind korrekt innerhalb des durch die anfangs bestimmte Ist-Position gegebenen Bezugssystems. Im Falle unkorrigierter GNSS-Positionsdaten verlieren die Soll-Positionen aufgrund der beschriebenen Drift nach längerer Zeit ihre Gültigkeit. Innerhalb des vergleichsweise kurzen Wendevorgangs können jedoch die jeweils aktuell bestimmten Ist-Positionen mit diesen Soll-Positionen verglichen werden. Da das korrekte Anfahren des Eintrittspunkts der Ziel-Fahrspur besonders wichtig ist, entspricht normalerweise eine der Soll-Positionen diesem Eintrittspunkt.

Gemäß einer Ausgestaltung wird die Spurlenkung wenigstens zeitweise manuell bedient. D.h. ein Benutzer bzw. Fahrer lenkt die Landmaschine manuell, z.B. mittels eines Lenkrades oder eines Steuerhebels. Dabei kann er die Fahrlinie der Landmaschine beispielsweise optisch kontrollieren. Dies ist dann gut möglich, wenn bei ausreichendem Tageslicht gearbeitet wird und der Bearbeitungsbereich in einer Weise strukturiert ist, die den Verlauf der Fahrspuren erkennen lässt. Selbstverständlich könnte der Fahrer zur Orientierung auch Sensoren nutzen.

Um die Präzision zu verbessern und den Fahrer - soweit vorhanden - zu entlasten, ist es bevorzugt, dass die Spurlenkung wenigstens zeitweise automatisch erfolgt. D.h. die Spurlenkung lenkt die Landmaschine ohne manuelles Eingreifen, gewissermaßen "autonom". Dies kann z.B. ebenfalls durch einen Regelungsprozess erfolgen, bei dem eine Soll-Fahrlinie vorgegeben ist und die Übereinstimmung einer Ist-Position mit dieser überprüft wird. Zur Bestimmung der Ist-Position weist die Landmaschine wenigstens einen Sensor auf. Die Soll-Fahrlinie bzw. die Ist-Position müssen nicht notwendigerweise zweidimensional verglichen werden. Wenn die Landmaschine z.B. entlang einer Ackerfurche oder einer Pflanzenreihe fahren soll, reicht es aus, deren (eidimensionale) Position quer zur Fahrtrichtung der Landmaschine zu überwachen.

Insbesondere kann sich die Spurlenkung an einer Struktur des Bearbeitungsbereichs orientieren. Insbesondere kann es sich um eine Struktur eines Bestandes handeln, welchen der Bearbeitungsbereich aufweist. Der Bestand, also die Nutzpflanzen, mit denen der Bearbeitungsbereich bepflanzt ist, weist in aller Regel Strukturen auf, die dem Verlauf der Fahrspuren entsprechen. Insbesondere weist der Bestand typischerweise eine Mehrzahl annähernd paralleler Pflanzenreihen auf, die der Orientierung dienen können. Zusätzlich oder alternativ kann auch eine Bestandsgrenze zur Orientierung genutzt werden. Z.B. kann eine Erntemaschine so gelenkt werden, dass sie die aktuelle Bestandsgrenze gerade noch erfasst. Aber auch ohne einen vorhandenen Bestand können andere Strukturen genutzt werden, z.B. Ackerfurchen, an denen sich die Spurlenkung orientiert.

Es können, auch in Abhängigkeit von der Beschaffenheit des Bearbeitungsbereichs, unterschiedliche Sensoren verwendet werden, z.B. mechanische oder optische Sensoren, aktive oder passive Sensoren. Gemäß einer Ausgestaltung, die beim Arbeiten im Bestand eingesetzt werden kann, orientiert sich die Spurlenkung in wenigstens einer Fahrspur mittels eines mechanischen Reihentasters. Ein solcher Reihentaster erfasst mechanisch zwei benachbarte Pflanzenreihen mittels Tastelementen und registriert, z.B. über die Auslenkung der Tastelemente, Positionsveränderungen gegenüber den Pflanzenreihen. Wird ein Tastelement stärker ausgelenkt, weil es sich einer Pflanzenreihe nähert, wird über die Spurlenkung ein Lenksignal erzeugt, das dem entgegenwirkt. Das Tastelement kann z.B. an einem Vorsatzgerät der Landmaschine angeordnet sein.

Gemäß einer anderen Ausgestaltung orientiert sich die Spurlenkung in wenigstens einer Fahrspur mittels eines optischen Bilderkennungssystems. Dabei wird mit wenigstens einer Kamera (die ggf. auch für Infrarot empfindlich sein kann) ein Bild der Umgebung der Landmaschine, insbesondere des Bereichs vor der Landmaschine, aufgenommen. In diesem Bild werden durch eine Software bestimmte Strukturen identifiziert, z.B. Pflanzenreihen, Ackerfurchen, eine Bestandsgrenze oder dergleichen, und zur Bestimmung der Ist-Position der Landmaschine genutzt.

Da die Lenkung im Vorgewende automatisch und ausschließlich anhand der (ggf. unkorrigierten) GNSS-Positionsdaten erfolgt, besteht eine hohe Abhängigkeit von der Richtigkeit dieser Positionsdaten bzw. von deren Auswertung. In Ausnahmefällen könnte die Wendelenkung fehlerhaft arbeiten, so dass die Soll-Fahrlinie nicht wie vorgesehen abgefahren wird. In diesen Fällen kann eine zusätzliche Absicherung hilfreich sein. Entsprechend einer solchen Ausgestaltung ist vorgesehen, dass unabhängig von den GNSS-Positionsdaten sekundäre Positionsdaten ermittelt werden und die Wendelenkung innerhalb des Vorgewendes deaktiviert wird, wenn die GNSS-Positionsdaten gemäß einem vordefinierten Abweichungskriterium übermäßig von den sekundären Positionsdaten abweichen. Die sekundären Positionsdaten können z.B. Odometriedaten sein, wobei basierend auf einer bekannten Anfangsposition (dem Austrittspunkt der Ausgangs-Fahrspur) die aktuelle Position anhand der Umdrehungen der Antriebsräder sowie des Lenkwinkels bestimmt wird. Dieses Verfahren kann je nach Bodenbeschaffenheit seinerseits unpräzise sein, so dass immer mit einer gewissen Abweichung zwischen den GNSS-Positionsdaten und den sekundären Positionsdaten zu rechnen ist. Es ist allerdings möglich, ein Abweichungskriterium festzulegen, das als Anzeichen für eine Fehlfunktion der Wendelenkung angesehen wird. D.h. die Abweichung der Positionsdaten ist übermäßig, geht also (deutlich) über das zu erwartende Maß hinaus, so dass man von einer Fehlfunktion ausgehen kann. In diesem Fall wird die Wendelenkung deaktiviert. Zusätzlich kann eine Meldung für den Benutzer ausgegeben werden. Die Landmaschine kann automatisch angehalten werden, z.B. bis der Benutzer sie manuell weiterlenkt. Es könnte auch versucht werden, mittels der sekundären Positionsdaten das automatische Durchfahren des Vorgewendes zu beenden, gewissermaßen mit einer Hilfs-Wendelenkung, die statt der GNSS-Positionsdaten die sekundären Positionsdaten (z.B. Odometriedaten) verwendet.

Die Aufgabe wird weiterhin gelöst mit einer Landmaschine, welche mittels einer von GNSS-Positionsdaten unabhängigen Spurlenkung sowie mittels einer Wendelenkung automatisch lenkbar ist, welche dazu eingerichtet ist, die Landmaschine basierend auf einer ausschließlich anhand von GNSS-Positionsdaten ermittelten Ist-Position der Landmaschine zu lenken, wobei die Landmaschine
- entlang einer Ausgangs-Fahrspur in einem Bearbeitungsbereich, bis zum Erreichen eines an den Bearbeitungsbereich angrenzenden Vorgewendes am Austrittspunkt der Ausgangs-Fahrspur, mittels der Spurlenkung lenkbar ist;
- durch das Vorgewende, bis zum Erreichen des Eintrittspunkts einer Ziel-Fahrspur im Bearbeitungsbereich, mittels der Wendelenkung lenkbar ist;
- entlang der Ziel-Fahrspur mittels der Spurlenkung lenkbar ist.

Erfindungsgemäß ist die Landmaschine dazu eingerichtet, wenigstens einen Übergang zwischen einer Fahrspur und dem Vorgewende automatisch zu erkennen und daraufhin automatisch zwischen Wendelenkung und Spurlenkung umzuschalten.

Die genannten Begriffe wurden bereits oben mit Bezug auf das erfindungsgemäße Lenkverfahren erläutert und werden daher nicht nochmals erklärt. Vorteilhafte Ausgestaltungen der erfindungsgemäßen Landmaschine entsprechen denen des erfindungsgemäßen Lenkverfahrens. Insbesondere ist bevorzugt, dass die Wendelenkung dazu eingerichtet ist, die Landmaschine basierend auf einer ausschließlich anhand unkorrigierter GNSS-Positionsdaten ermittelten Ist-Position der Landmaschine zu lenken.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Draufsicht einer erfindungsgemäßen Landmaschine innerhalb eines Feldes;
- Fig. 2: eine Draufsicht eines größeren Teils des Feldes mit der Landmaschine sowie einer Fahrlinie der Landmaschine; sowie
- Fig. 3: eine Flussdiagramm eines erfindungsgemäßen Lenkverfahrens zum Lenken der Landmaschine aus Fig. 1.

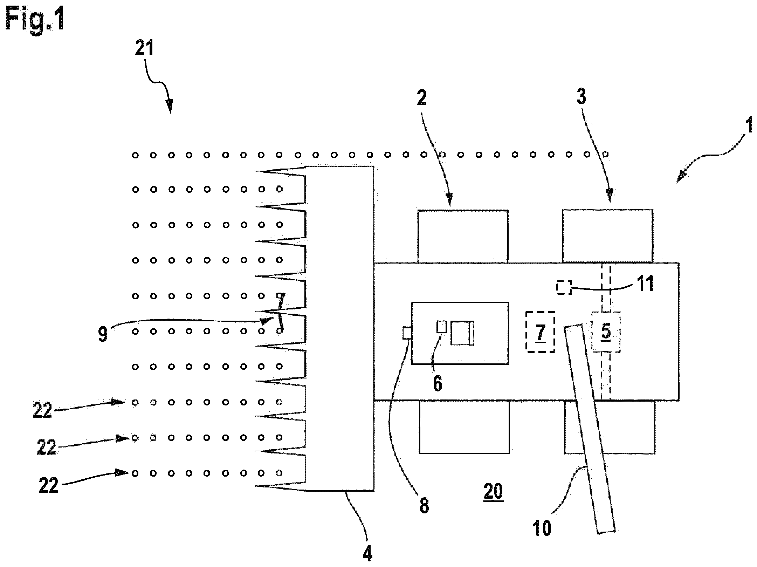

Fig. 1 zeigt eine Draufsicht einer erfindungsgemäßen Landmaschine, genauer gesagt eines Feldhäckslers 1. Die Darstellung ist aus Gründen der Übersichtlichkeit schematisiert und stark vereinfacht. Erkennbar sind Räder einer Vorderachse 2 sowie einer lenkbaren Hinterachse 3. Selbstverständlich könnte alternativ oder zusätzlich auch die Vorderachse lenkbar sein. Ein Vorsatzgerät 4 dient zum Ernten und Verarbeiten von Erntegut, welches über einen schwenkbaren Auswurfbogen 10 an ein hier nicht dargestelltes nebenherfahrendes Transportfahrzeug abgegeben wird. Ein Lenkaktor 5 dient zur Einstellung eines Lenkwinkels der Hinterachse 3 und kann z.B. hydraulisch oder elektrisch betreibbar sein. Der Lenkaktor 5 kann vom Fahrer des Feldhäckslers über ein Bedienelement 6, z. B. einen Steuerhebel oder ein Lenkrad, angesteuert werden. Außerdem ist eine automatische Steuereinheit 7 mit dem Lenkaktor 5 verbunden und kann diesen ansteuern. Die Steuereinheit 7 kann mit verschiedenen Sensoren verbunden sein, z.B. einer Kamera 8, die wenigstens den Bereich vor dem Feldhäcksler erfasst, einem Reihentaster 9, der am Vorsatzgerät 4 angeordnet ist, oder anderer, hier nicht gezeigter Sensoren. Außerdem ist die Steuereinheit 7 mit einem GNSS-Empfänger 11 verbunden, über welchen sie Signale verschiedener Navigationssatelliten empfängt. Aus diesen kann die Steuereinheit 7 unkorrigierte GNSS-Positionsdaten des Feldhäckslers 1 errechnen. Diese beruhen ausschließlich auf den Signalen der Satelliten und nicht auf Signalen einer terrestrischen Basisstation. Sie unterliegen einer Drift, welche auch bei optimalem Empfang zu einer Ungenauigkeit von einigen Metern und einer entsprechenden möglichen Abweichung einer ermittelten Ist-Position PI von der wahren Position des Feldhäckslers 1 führt.

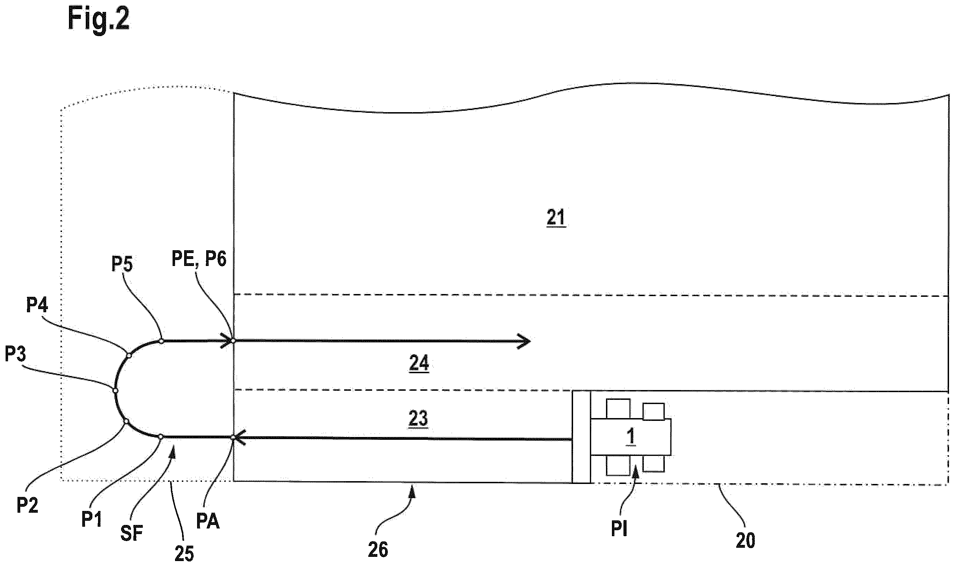

Fig. 2 zeigt den Feldhäcksler 1 in einem Bearbeitungsbereich, genauer einem Feld 20, welches randseitig an ein Vorgewende 25 angrenzt. Bei der Bearbeitung des Feldes 20 fährt der Feldhäcksler 1 nacheinander eine Mehrzahl paralleler Fahrspuren 23, 24 ab, die parallel zu Pflanzenreihen 22 eines Bestandes 21 (z.B. von Mais) verlaufen. Innerhalb einer Fahrspur 23, 24 kann sich die Lenkung des Feldhäckslers 1 somit an den Pflanzenreihen 22 als Strukturen des Bestandes 21 orientieren. Alternativ wäre auch eine Orientierung an einer aktuellen Bestandsgrenze 26 möglich.

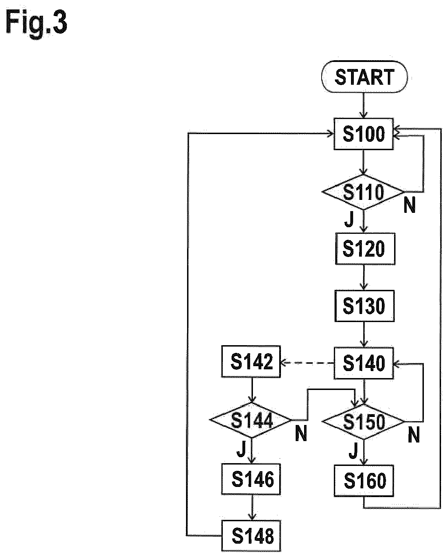

Wie im Flussdiagramm in Fig. 3 dargestellt, wird der Feldhäcksler 1 zunächst, in Schritt S100, durch eine Spurlenkung entlang einer Ausgangs-Fahrspur 23 gelenkt. Die Spurlenkung könnte auf einer manuellen Steuerung über das Bedienelement 6 beruhen. Alternativ könnte sie aber auch automatisch durch die Steuereinheit 7 erfolgen, die z.B. mittels Bilderkennung die Bilder der Kamera 8 auswertet und hieran erkennt, ob die aktuelle Fahrlinie des Feldhäckslers 1 den Pflanzenreihen 22 und/oder der Bestandsgrenze 26 folgt. Die Steuereinheit 7 könnte auch anhand der Signale des Reihentasters 9 erkennen, ob der Feldhäcksler 1 dem Verlauf der Pflanzenreihen 22 folgt. Bei einer erkannten Abweichung von der vorgesehenen Fahrlinie steuert die Steuereinheit 7 den Lenkaktor 5 an, um eine Korrektur vorzunehmen. Es wird kontinuierlich oder wiederholt in Schritt S110 geprüft, ob ein Austrittspunkt PA der Ausgangs-Fahrspur 23 erreicht wurde. Dies kann z.B. über die Bilderkennung erfolgen, über den Reihentaster 9, der am Ende des Bestands 21 kein Erntegut mehr erfasst, oder über eine sich ändernde Stellung von Anpresswalzen. Auch andere Kriterien sind denkbar, z.B. vom Fahrer ausgelöste Vorgänge wie das Ausheben des Vorsatzgeräts 4, ein Schwenken des Auswurfbogens 10 oder das Ändern des Lenkwinkels (bei manueller Steuerung). Neben einer automatischen Überprüfung kann der Fahrer auch selbst, z.B. durch Beobachtung der Umgebung, überprüfen, ob der Austrittspunkt PA der Ausgangs-Fahrspur 23 erreicht wurde. Ist der Austrittspunkt PA noch nicht erreicht, kehrt das Verfahren zu Schritt S100 zurück und es wird weiter (manuell oder automatisch) mit der Spurlenkung gelenkt.

Ist der Austrittspunkt erreicht, wird in Schritt S120 eine Wendelenkung aktiviert. Dies kann manuell durch den Fahrer oder automatisch durch die Steuereinheit 7 erfolgen. Im hier gezeigten Beispiel werden sowohl die Spurlenkung (sofern diese automatisch arbeitet) als auch die Wendelenkung über eine einzige Steuereinheit 7 realisiert, es könnten aber auch wenigstens teilweise unterschiedliche, räumlich getrennte Hardwarekomponenten für die beiden Lenkungen genutzt werden. Nach ihrer Aktivierung arbeitet die Wendelenkung in jedem Fall automatisch bzw. autonom, in dem Sinne, dass sie ohne Eingaben des Fahrers arbeitet.

Die Wendelenkung ermittelt zunächst in Schritt S130 eine Soll-Fahrlinie SF durch das Vorgewende 25 vom Austrittspunkt PA der Ausgangs-Fahrspur zum Eintrittspunkt PE einer (in diesem Fall unmittelbar angrenzenden) Ziel-Fahrspur 24. Hierzu wird zunächst die relative Position des Eintrittspunkts PE gegenüber dem Austrittspunkt PA ermittelt. Dies kann z.B. durch Bilderkennung erfolgen oder indem anhand einer Schlagkartei der Verlauf der Grenze des Feldes 20 an der aktuellen Position des Feldhäckslers 1 bestimmt wird. Da sich der Verlauf der Grenze normalerweise nicht innerhalb weniger Meter ändert, reicht die Genauigkeit der unkorrigierten GNSS-Positionsdaten aus, um eine ungefähre Absolutposition für die Schlagkartei zu ermitteln. Wenn der Grenzverlauf bekannt ist, wird ein Versatz entlang der Grenze bestimmt, welcher der Breite des Vorsatzgerätes 4 entspricht. Nachdem der Eintrittspunkt PE bekannt ist, wird die Soll-Fahrlinie SF so bestimmt, dass ein minimal möglicher Wenderadius des Feldhäckslers 1 nicht unterschritten wird und das Vorgewende 26 nicht verlassen wird.

In Fig.2 ist eine halbkreisartige Soll-Fahrlinie SF gezeigt, diese könnte aber auch komplizierter sein. Es werden eine Mehrzahl von Soll-Positionen P1-P6 entlang der Soll-Fahrlinie SF ermittelt, die basierend auf der am Austrittspunkt PA ermittelten Ist-Position PI berechnet werden. Die Soll-Positionen P1-P6 werden also relativ zu der Ist-Position PI am Austrittspunkt PA ermittelt und weisen aufgrund der Drift der GNSS-Positionsdaten u.U. eine erhebliche Abweichung von den tatsächlichen, absoluten Positionen auf. Dies ist aber für die Navigation entlang der Soll-Fahrlinie SF unerheblich, solange sich die Drift während des Wendevorgangs nicht (wesentlich) bemerkbar macht. Hiervon kann man ausgehen, da der Wendevorgang innerhalb von ca. 10 s durchgeführt wird. Dabei lenkt die Wendelenkung, in Schritt S140, den Feldhäcksler, indem sie wiederholt die auf den unkorrigierten GNSS-Positionsdaten basierende Ist-Position ermittelt und mit den Soll-Positionen vergleicht. Bei einer wesentlichen Abweichung korrigiert die Steuereinheit 7 mittels des Lenkaktors 5 den Lenkwinkel. Außerdem überprüft die Steuereinheit in Schritt S150, ob der Eintrittspunkt PE bereits erreicht wurde. Dies kann wiederum durch Bilderkennung erfolgen oder mittels des Reihentasters 9, der am Eintrittspunkt PE erstmalig wieder Erntegut erfasst. Ein weiteres Kriterium wäre das Erreichen derjenigen vorher berechneten SollPosition P6, die dem Eintrittspunkt PE entspricht. Schließlich könnte die Überprüfung auch durch den Fahrer erfolgen. Wenn der Eintrittspunkt erreicht wurde, wird bei Schritt S160 die Wendelenkung deaktiviert, automatisch oder manuell durch den Fahrer, und die Spurlenkung wird wieder aktiviert.

Für den Fall einer Fehlfunktion der Wendelenkung aufgrund fehlerhafter GNSS-Positionsdaten, können optional in Schritt S142 sekundäre Positionsdaten erfasst werden, z.B. durch Odometrie, indem Lenkwinkel sowie Umdrehungen der Räder überwacht und somit eine ungefähre Position berechnet wird. Diese sekundären Positionsdaten werden mit den GNSS-Positionsdaten verglichen. Dabei wird bei S144 anhand eines vorher festgelegten Abweichungskriteriums entschieden, ob die GNSS-Positionsdaten und die sekundären Positionsdaten übermäßig voneinander abweichen. Falls nein, wird die Wendelenkung mit Schritt S150 normal fortgesetzt. Falls ja, wird bei S146 die auf GNSS-Positionsdaten basierende automatische Spurlenkung deaktiviert und der Fahrer kann einen Hinweis erhalten, das Vorgewende in Schritt S148 manuell zu durchfahren. Falls nein, fährt das Verfahren mit Schritt S150 fort.

Nach dem Erreichen des Eintrittspunkts PE und dem Deaktivieren der Wendelenkung wird der Feldhäcksler 1 mittels der Spurlenkung durch die Ziel-Fahrspur 24 gelenkt, d.h. das Verfahren kehrt wieder zu S100 zurück. Dies gilt auch, falls der Fahrer in Schritt S148 den Feldhäcksler 1 manuell durch das Vorgewende 25 gelenkt hat.

In dem Hier erläuterten Beispiel ermittelt die Wendelenkung die Ist-Position PI ausschließlich anhand unkorrigierter GNSS-Positionsdaten. Alternativ könnten auch korrigierte GNSS-Positionsdaten verwendet werden, die z.B. terrestrische Signale eines Korrekturdienstanbieters nutzen. In diesem Fall ist keine (nennenswerte) Drift zu berücksichtigen. Da allerdings in den Fahrspuren 23, 24 unabhängig von den GNSS-Positionsdaten gelenkt wird, lassen sich z.B. Gebühren für die Nutzung der terrestrischen Signale wesentlich reduzieren.

## Patentansprüche

1. Lenkverfahren für eine Landmaschine (1), mit den Schritten:
- Lenken (S100) der Landmaschine (1) entlang einer Ausgangs-Fahrspur (23) in einem Bearbeitungsbereich (20), bis zum Erreichen eines an den Bearbeitungsbereich (20) angrenzenden Vorgewendes (25) an einem Austrittspunkt (PA) der Ausgangs-Fahrspur (23), mittels einer von GNSS-Positionsdaten unabhängigen Spurlenkung;
- Automatisches Lenken (S140) der Landmaschine (1) durch das Vorgewende (25), bis zum Erreichen eines Eintrittspunkts (PE) einer Ziel-Fahrspur (24) im Bearbeitungsbereich (20), mittels einer Wendelenkung, welche die Landmaschine (1) basierend auf einer ausschließlich anhand von GNSS-Positionsdaten ermittelten Ist-Position (PI) der Landmaschine (1) lenkt; sowie
- Lenken (S100) der Landmaschine (1) entlang der Ziel-Fahrspur (24) mittels der Spurlenkung.

2. Lenkverfahren nach Anspruch 1, **dadurch gekennzeichnet, dass** die Wendelenkung die Landmaschine (1) basierend auf einer ausschließlich anhand unkorrigierter GNSS-Positionsdaten ermittelten Ist-Position (PI) der Landmaschine (1) lenkt.

3. Lenkverfahren nach einem der vorangehenden Ansprüche, **dadurch gekennzeichnet, dass** eine Soll-Fahrlinie (SF) vom Austrittspunkt (PA) der Ausgangs-Fahrspur (23) zum Eintrittspunkt (PE) der Ziel-Fahrspur (24) ermittelt wird (S130), bevor die Landmaschine (1) entsprechend der vorab ermittelten Soll-Fahrlinie (SF) durch das Vorgewende gelenkt wird (S140).

4. Lenkverfahren nach einem der vorangehenden Ansprüche, **dadurch gekennzeichnet, dass** ausgehend von einer ermittelten Ist-Position (PI) am Austrittspunkt (PA) der Ausgangs-Fahrspur (23) eine Mehrzahl von Soll-Positionen (P1-P6) entlang der Soll-Fahrlinie (SF) bestimmt werden, mit welchen die Wendelenkung die jeweilige Ist-Position (PI) beim Durchfahren des Vorgewendes (25) vergleicht.

5. Lenkverfahren nach einem der vorangehenden Ansprüche, **dadurch gekennzeichnet, dass** die Spurlenkung wenigstens zeitweise manuell bedient wird.

6. Lenkverfahren nach einem der vorangehenden Ansprüche, **dadurch gekennzeichnet, dass** die Spurlenkung wenigstens zeitweise automatisch arbeitet.

7. Lenkverfahren nach einem der vorangehenden Ansprüche, **dadurch gekennzeichnet, dass** sich die Spurlenkung an einer Struktur (22, 26) des Bearbeitungsbereichs (20) orientiert.

8. Lenkverfahren nach einem der vorangehenden Ansprüche, **dadurch gekennzeichnet, dass** sich die Spurlenkung in wenigstens einer Fahrspur (23, 24) mittels eines mechanischen Reihentasters (9) orientiert.

9. Lenkverfahren nach einem der vorangehenden Ansprüche, **dadurch gekennzeichnet, dass** sich die Spurlenkung in wenigstens einer Fahrspur (23, 24) mittels eines optischen Bilderkennungssystems (7, 8) orientiert.

10. Lenkverfahren nach einem der vorangehenden Ansprüche, **dadurch gekennzeichnet, dass** wenigstens ein Übergang zwischen einer Fahrspur (23, 24) und dem Vorgewende (25) automatisch erkannt (S110, S150) und daraufhin automatisch zwischen Wendelenkung und Spurlenkung umgeschaltet wird (S120, S160).

11. Lenkverfahren nach einem der vorangehenden Ansprüche, **dadurch gekennzeichnet, dass** unabhängig von den GNSS-Positionsdaten sekundäre Positionsdaten ermittelt werden (S142) und die Wendelenkung innerhalb des Vorgewendes (25) deaktiviert wird (S146), wenn die GNSS-Positionsdaten gemäß einem vordefinierten Abweichungskriterium übermäßig von den sekundären Positionsdaten abweichen.

12. Landmaschine (1), welche mittels einer von GNSS-Positionsdaten unabhängigen Spurlenkung sowie mittels einer Wendelenkung automatisch lenkbar ist, welche dazu eingerichtet ist, die Landmaschine (1) basierend auf einer ausschließlich anhand von GNSS-Positionsdaten ermittelten Ist-Position (PI) der Landmaschine (1) zu lenken, wobei die Landmaschine (1)
- entlang einer Ausgangs-Fahrspur (23) in einem Bearbeitungsbereich (20), bis zum Erreichen eines an den Bearbeitungsbereich (20) angrenzenden Vorgewendes (25) am Austrittspunkt (PA) der Ausgangs-Fahrspur (23), mittels der Spurlenkung lenkbar ist;
- durch das Vorgewende (25), bis zum Erreichen des Eintrittspunkts (PE) einer Ziel-Fahrspur (24) im Bearbeitungsbereich, mittels der Wendelenkung lenkbar ist; und
- entlang der Ziel-Fahrspur (24) mittels der Spurlenkung lenkbar ist, **dadurch gekennzeichnet, dass** die Landmaschine dazu eingerichtet ist, wenigstens einen Übergang zwischen einer Fahrspur (23, 24) und dem Vorgewende (25) automatisch zu erkennen und daraufhin automatisch zwischen Wendelenkung und Spurlenkung umzuschalten.

13. Landmaschine nach Anspruch 12, **dadurch gekennzeichnet, dass** die Wendelenkung dazu eingerichtet ist, die Landmaschine (1) basierend auf einer ausschließlich anhand unkorrigierter GNSS-Positionsdaten ermittelten Ist-Position (PI) der Landmaschine (1) zu lenken.
